# EUROPEAN PATENT APPLICATION

(11) **EP 4 738 120 A1**
(43) Date of publication of application: **06.05.2026**
(21) Application number: 25211902.9
(22) Date of filing: 29.10.2025
(51) Int. Cl.: G06F 9/50, G06F 1/3206

(54) **ENERGY MONITORING AND OPTIMIZATION SYSTEM**

(30) Priority: 31.10.2024 US 202418933338
(71) Applicant: Microsoft Technology Licensing, LLC, Redmond, WA 98052-6399 (US)
(72) Inventor: TAFRESHIAN, Farzam, Redmond, 98052-6399 (US)
(74) Representative: Murgitroyd & Company

(57) **Abstract**

An energy manager stores and manages target energy policies for a processing device. Each target energy policy defines one or more policy-triggering criteria and at least one target energy action in response to satisfaction of the policy-triggering criteria. Each set of policy-triggering criteria depends, at least in part, on a power usage score that the energy manager dynamically determines for the processing device based on energy consumption metrics captured for the processing device.

## Description

### Cross Reference To Related Applications

This application claims priority to U.S. Patent Application 18/933,338 filed 31 October 2024, the entirety of which is hereby incorporated herein by reference for all purposes.

### Background

Conventional cloud computing platforms provide processing resources to end customers. These processing resources are, for example, provided as virtual machines (VMs) hosted by physical servers located at data centers. An end customer commonly interacts with a cloud computing platform to configure a network of VMs that the customer uses to execute various processing jobs. Notably, a collection of processing jobs queued by the customer may collectively consume variable quantities of energy depending upon the timing and distribution of jobs across the network.

### Summary

In some aspects, the techniques described herein relate to a method for reducing power usage of a processing device, the method including: storing a target energy policy for a processing device, the target energy policy defining policy-triggering criteria and a target energy action to be taken when the policy-triggering criteria are satisfied; computing a power usage score for the processing device based on energy consumption metrics captured for the processing device; and executing the target energy action based at least in part on the computed power usage score assuming a value within a range of values specified by the policy-triggering criteria.

In some aspects, the techniques described herein relate to one or more tangible processor-readable storage media embodied with instructions for executing on one or more processors and circuits of a computing device a process for reducing power usage within a client network of computing resources, the process including: accessing a target energy policy for the client network, the target energy policy defining policy-triggering criteria and at least one target energy action to be taken when the policy-triggering criteria are satisfied; computing a power usage score for a computing resource of the client network based on energy consumption metrics captured for the computing resource; and executing the target energy action based at least in part on the computed power usage score assuming a value within a range of values specified by the policy-triggering criteria.

In some aspects, the techniques described herein relate to a computing system for reducing power usage within a client network of computing resources, the computing system including: one or more hardware processors; a policy generator executable by the one or more hardware processors and configured to access a target energy policy for the client network, the target energy policy defining policy-triggering criteria and at least one target energy action to be taken when the policy-triggering criteria are satisfied; a scorer stored in memory and executable by the one or more hardware processors, the scorer configured to compute a power usage score for a computing resource of the client network based on energy consumption metrics captured for the computing resource; and an action determiner executable by the one or more hardware processors and configured to execute the target energy action based at least in part on the determined power usage score assuming a value within a range of values specified by the policy-triggering criteria.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Other implementations are also described and recited herein.

### Brief Description of the Drawings

FIG. 1 illustrates an example client computing network that utilizes an energy manager to reduce the total energy expended by a client machine executing a collection of client workloads.
FIG. 2 illustrates an example computing environment for an energy manager that reduces computing inefficiencies in a client computing network supported by a cloud computing system.
FIG. 3 illustrates an example computing environment including an energy manager that reduces computing inefficiencies in a client computing network supported by a cloud computing system.
FIG. 4 illustrates examples of operations that reduce energy usage on a client network of computing resources.
FIG. 5 illustrates an example computing device for implementing the described technology.

### Detailed Description

Conventional cloud computing platforms commonly implement load balancing to attempt to reduce energy usage within customer-configured networks. However, such conventional load balancing applies predefined rules that do not consider computing context specific to different clients. For example, conventional load-balancing logic does not implement load-balancing decisions based on client-specific workload patterns (e.g., the volume of workloads over specific time periods, types of workloads being processed over specific time periods, etc.) Because these workload patterns are not considered, significant inefficiencies remain even when applying conventional load-balancing schemes. For example, due to context-specific workload patterns, some computing resources of a user network may be overloaded (e.g., processing a significant amount) at peak processing times during a nominal day while also being underloaded (e.g., processing little or running idle) at other times during the same day. Overloaded computing resources, which already consume substantial power for processing, may also face overheating and require additional energy usage for cooling (e.g., using cooling fans) as they struggle to manage excess workload. Underused or idle machines, on the other hand, may waste energy by being powered on while not performing a significant amount of work. The impact of these inefficiencies grows exponentially higher within cluster computing environments deployed for enterprise clients, where multiple computing resources (e.g., hundreds of virtual machines (VMs)) are used to execute high-workload tasks on behalf of individual end-clients.

Energy consumption could be substantially reduced within a user network by distributing workloads across the VMs of a customer network in a way that substantially prevents underloading and overloading. However, current load-balancing technologies are inadequate for this purpose due to their inability to enforce user-specific target energy policies (e.g., energy reduction policies that efficiently distribute workloads in time as well as across physical and/or virtual machines without enforcement of hard-lined rules that risk conflict with customer execution priorities).

Although existing workload management tools may provide users with some degree of control over when and how their respective workloads are executed, presently available workload management tools do not expose job-specific power consumption metrics to end users or otherwise provide end users with the ability to self-manage workload distribution (in time or space) based on power metrics dynamically computed within their respective networks.

The described technology introduces a power management application that provides users with the ability to define and/or selectively implement customized target energy policies. The power management application dynamically computes power usage scores of client computing resources based on corresponding power usage metrics (e.g., memory utilization, power readings, etc.) and enforces user-specific and user-customizable target energy policies that depend, at least in part, on the dynamically computed power usage scores. Each target energy policy defines policy-triggering criteria and target energy actions. When the policy-triggering criteria are satisfied for a given target energy policy, the corresponding target energy polic(ies) are automatically implemented.

In one implementation, the herein-disclosed power management application provides suggestions for customizable target energy policies for load balancing within the client's computing system based on the dynamically computed metrics of the client's specific computing environment. The target energy policies can define suggested actions for reducing energy usage within the client's computing resources (e.g., physical computing device(s), virtual machine(s), or network of physical computing devices and/or virtual machines) with policy-triggering criteria that trigger execution of the actions. For example, energy usage-reduction actions defined in a customizable target energy policy may include adding an additional computing resource to a customer's network, pausing workloads executing on a computing resource, transferring workloads from one computing resource to another within the customer's network, or other actions for load balancing. Accordingly, the described technology provides and acts upon customizable target energy policies to reduce the energy usage of client computing systems in cloud computing platforms compared to conventional load balancing schemes that merely consider predefined settings and are not adapted to a client's specific computing environment. As a result, the energy usage-reduction actions triggered by the herein-disclosed customizable target energy policies reduce the energy usage of client computing systems, for example, by reducing the occurrence of overloading or underloading computing resources compared to conventional load balancing schemes.

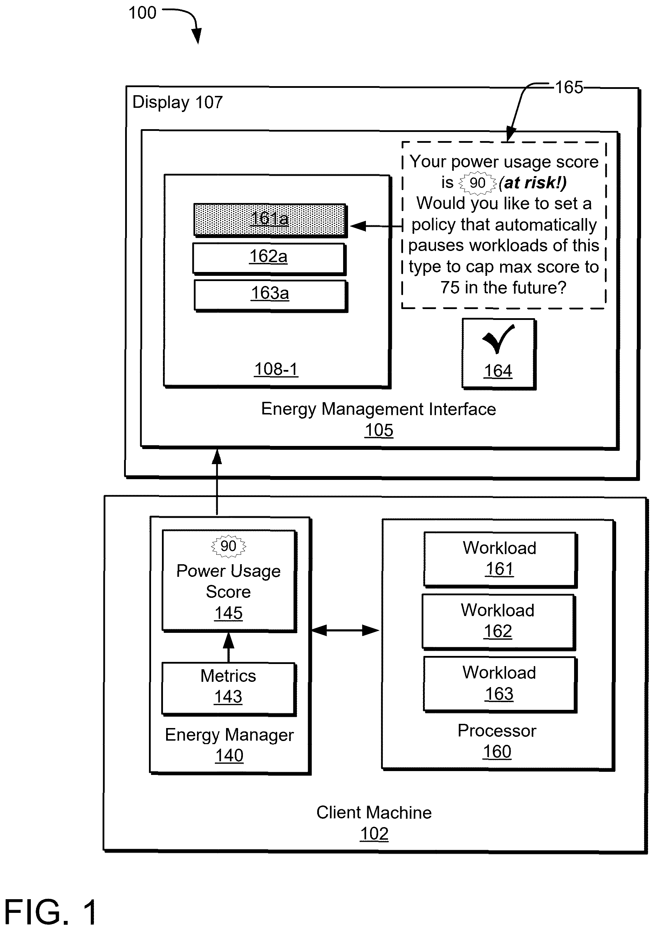

FIG. 1 illustrates an example client computing network 100 that utilizes an energy manager 140 to target an expenditure of energy by a client machine 102 executing a collection of client workloads (e.g., workloads 161, 162, and 163). The client machine 102 includes a processor 160 that executes an operating system (not shown) in addition to various client workloads (e.g., workloads 161-163). In various implementations, the energy manager 140 is either part of the operating system or an application executed by the operating system. The energy manager 140 generates an energy management interface 105 (described in further detail below) that is presented on a display 107. This interface provides interactive features that allow an end user to configure customized energy-reduction policies that, once implemented, enforce automated target energy actions, such as actions that alter where (e.g., by which machine) and/or when certain customer workloads are executed, such as based on a dynamically-determined power usage metrics of the client machine 102, characteristics of workloads begin concurrently executed, and/or state data of the client machine 102 such as particular usage, power, device health, or network telemetry metrics satisfying predefined values or ranges.

The client machine 102 may be either a physical machine in possession of an end user (e.g., a personal compute device) or a virtual machine (VM) hosted by a cloud network. In implementations where the client machine 102 is a VM, the display 107 is of a device that separate (remote) from the client machine 102. In implementations where the customer machine is a personal computing device, the display 107 is coupled to the client machine via a physical (local) connection interface.

The energy manager 140 implements various energy-reduction policies that guide performance of different types of target energy actions in different implementations. In the illustrated implementation, the computing network 100 includes a single machine (e.g., the client machine 102), and the energy manager 140 achieves target energy, at least in part by enforcing target energy policies that alter the temporal distribution of the workloads 161-163 in a way that reduces overloading. For example, it may be possible to reduce the energy consumption of a cooling system (not shown) onboard the client machine 102 by distributing the workloads 161-163 in time as opposed to executing them simultaneously.

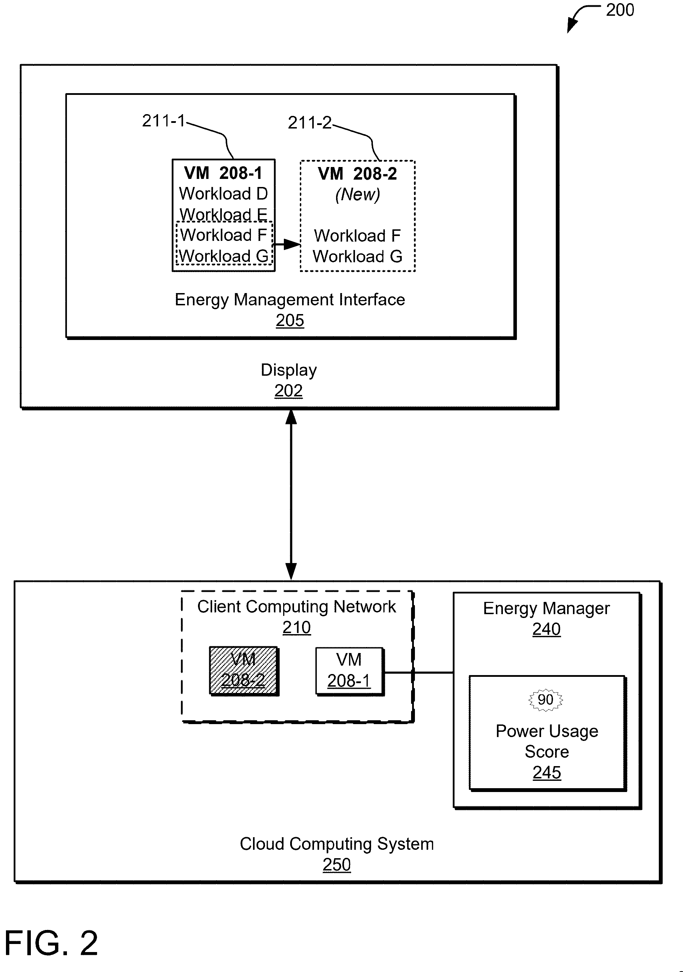

In other implementations where the client computing network 100 includes multiple client machines (e.g., cloud-based VMs or physical devices on-site at an enterprise facility of the client), the energy manager 140 may implement one or more target energy policies that provide for reassigning some of the workloads (e.g., workload 161, workload 162, workload 163) to other physical or virtual machines within the customer network 100. An example of policy enforcement within a multi-device customer network is shown with respect to FIG. 2.

In FIG. 1, the workloads (e.g., workload 161, workload 162, workload 163) are nominal customer workloads that may be queued either by an end user or by automated processes executing on the client machine 102 or on other devices with network connectivity to the client machine 102.

In the example shown, it is assumed that the workloads (e.g., workload 161, workload 162, workload 163) are queued simultaneously for execution on the client machine 102. The energy manager 140 determines metrics 143 for the client machine 102 and, based on such metrics, dynamically determines a power usage score 145 indicative of the overall quantity of power being currently consumed by the client machine 102 (e.g., power attributable to various operating application tasks, network component activities, cooling system activities, and more). The metrics 143 may include, for example, a central processing unit (CPU) utilization, a graphics processing unit (GPU) utilization, a memory utilization, disk usage, hardware temperature, hardware fan speed, a task uptime compared to a task actual usage, a power meter reading (e.g., a wattage), or other metric that describes a processing state of the computing resource. In some implementations, metrics for a virtual machine (VM) (an example type of computing resource) may describe the state of one or more hardware processing devices that support the VM computing resource. In some implementations, the energy manager 140 communicates with one or more other processors within the client compute network 100, sensors (e.g., temperature sensors), meters (e.g., wattage power meter), or other hardware to determine and/or receive the metrics 143. For example, the energy manager 140 may determine the metrics 143 of the client machine 102 during the processing of workflows (e.g., workload 161, workload 162, workload 163 executed by the processor 160) for the client. The metrics 143 include information that describes the state of the client machine 102 or of one or more hardware processing devices that support the client machine 102. In some implementations, some or all of the functionality of the energy manager 140 is executed by a remote processor of the client's machine 102. For example, the metrics 143 are obtained by a remotely-executing network monitor application.

Based on the metrics 143, the energy manager 140 determines the power usage score 145 for the client machine 102. In some implementations, a power usage score of zero (0) means that the computing resource is consuming no power (e.g., it is shut down), and a power usage score of one hundred (100) means that the computing resource is consuming a maximum possible amount of power. In the example depicted in FIG 1, the energy manager 140 calculates a power usage score 145 of ninety, or "90," for the client's machine 102.

In some implementations, the power usage score 145 and some or all of the metrics 143 used to calculate this power usage score 145 are displayed via the energy management interface 105. The metrics 143 may, for example, be arranged in order of the contribution significance to the power usage score 145 to help the user easily understand how power is being consumed on the device and how this consumption correlates with the power usage score 145. In the example depicted in FIG. 1, a score of "90" is displayed in user interface object 165 along with a user interface object 108-1 representing the client machine 102 and including sub-objects (e.g., sub-object 161a, sub-object 162a, and sub-object 163a) that identify workloads being executed on the client machine 102.

In some implementations, the energy management interface 105 displays a category corresponding to a power usage score, for example, a "low power usage" category corresponding to a score of 0-25, a "medium power usage" category corresponding to a power usage score of 25-60, an "at risk power usage" category corresponding to a power usage score of 60-75, a "high power usage" category corresponding to a power usage score of 75-90, and a "bottleneck" category corresponding to a power usage score of 90-100. In other implementations, additional categories may be used in addition to and/or instead of one or more of the categories listed above. Categories may correspond to score ranges other than those in this example. In the example depicted in FIG. 1, the "at risk" category for the power usage score 145 is represented within user interface object 165.

In addition to identifying presently executing workloads and presenting energy metrics, including the power usage score 145, the energy management interface 105 also includes interactive user interface elements that allow an end user to configure (e.g., customize and selectively implement) target energy policies. For example, the energy management interface 105 may include a control panel (not shown) that provides user-configurable options for defining policy-triggering criteria and target energy action(s) to be automatically implemented when the policy-triggering criteria are satisfied. As used herein, "policy-triggering criteria" is intended to refer to either a single policy-triggering criterion or multiple policy-triggering criteria. Each individual user-customizable target energy policy defines policy-triggering criteria that, when satisfied by the client machine 102 or client compute network 100, trigger execution of one or more target energy actions also defined by the target energy policy.

In some implementations, the energy manager 140 analyzes the metrics 143 and/or workload trends on the client machine 102 to identify a target energy policy (e.g., a predefined or AI-generated) policy likely to reduce a computed value for the power usage score 145 on the client machine 102 . The identified "suggested" policy is then presented it to the client via the energy management interface 105, and the user is provided with an option to decline or accept implementation of the suggested target energy policy. In some implementations, the user may be provided with an option to modify the suggested policy before accepting. In still other implementations, the suggested target energy policy may be automatically implemented by the energy manager 140 (e.g., if the user has enabled an "energy savings" mode option on the user machine 102 .

The target energy policy defines policy-triggering criteria and a target energy action to be automatically implemented in response to the satisfaction of the policy-triggering criteria. The policy-triggering criteria define at least a threshold power usage score or score range that is needed to trigger the application of the policy and may, in various implementations, define other factors. For example, some target energy policies may provide for performing target energy action(s) when a particular power usage score is observed in combination with certain workload characteristics, power metrics, and/or other policy-triggering criteria. Workload characteristics may include a type of workload, a priority level that has been specified for the workload (e.g., urgent, high priority, low priority, etc.), a source application that queues the workload, a specified deadline for the workload, and/or other workload characteristics. Power metrics may include the metrics 143 used to determine the power usage score 145. Other policy-triggering criteria may include time information, such as the current time of day, the current day of the week, the current day of the year, or other time information. Other policy-triggering criteria may include a current power usage score. Users may be able to configure one or more of the policy-triggering criteria or the target energy action(s) of the target energy policy.

For example, one target energy policy may define a target energy action of pausing or delaying the processing of a workload upon satisfaction of policy-triggering criteria, including (1) the current time of day being between 9:00 a.m. and 5:00 p.m., (2) the workload type being "low priority," and (3) the current power usage score being at or above 75. In this example, a low-priority workload would be processed between 9:00 a.m. and 5:00 p.m. as long as the current power usage score is below 75. However, if the power usage score of 80 were to be observed at the time of 9:05 am, the low priority workload would be delayed until the sooner of 5 pm or the time at which the power usage score drops to at or below 75. Accordingly, in this example, the target energy action is not performed unless all three of the policy-triggering criteria are satisfied for the target energy policy.

In some implementations, target energy policies may be configured so that target energy actions are performed if a number of the total (e.g., one of three, two of three, three of five) policy-triggering criteria are satisfied. In some implementations, target energy policies may be configured so that target energy actions are performed if policy-triggering criteria are satisfied in a specific order.

In addition to deferring workloads for later times, the target energy actions of some target energy policies may alternatively provide for transferring workloads to other machines in the client compute network 100 or selectively terminating workloads without deferment (e.g., CPU utilization spikes high enough to be indicative of a problem with the workload).

In some scenarios, a target energy policy that transfers workload(s) to another computing resource has the effect of increasing the power usage score of the other computing resource. However, overall power consumption may still be reduced within the client compute network 100 in scenarios where one computing resource with a high power usage score is performing multiple context switches to perform different tasks within one or multiple workloads. The overall time and power used to finish the workload may be higher in these scenarios than in scenarios where the workload is transferred to a computing resource that is using less power (e.g., that is less "busy").

In FIG. 1, the energy manager 140 is shown presenting a suggested target energy policy via the user interface object 165, which reads, "Your computing resource power usage score is '90' *at risk.* Would you like to set a policy that automatically pauses workloads of this type to cap max score to 75 in the future?" In the example depicted, the energy management interface 105 displays the sub-object 161a with an indication (e.g., shading, selection, annotation, or other indication) illustrating a selection of the currently executing workloads that would, in the future, be automatically paused by the suggested policy. In this simplified example, workload "type" may be understood as referring to an identity of a source application that is executing the workload (e.g., all workloads queued by a particular source application); however, in various implementations, the herein-disclosed technology implements target energy policies that alter *where* a workload is executed (e.g., by what device) and/or *when* a workload is executed based on other types of workload characteristics including, for example, estimated workload size (e.g., size of file inputs to be processed), identity of a host machine that initiated the workload (e.g., if other than the client machine 102), a deadline for the workload, a priority level of the workload (e.g., urgent, high priority, low priority, etc.), a function of the workload (e.g., transaction processing, data backup, or other function), and more.

In some implementations, the energy manager 140 does not suggest a target energy policy for the user but presents the power usage score and metrics used to calculate the power usage score via the energy management interface 105 along with one or more user interface objects for the user to manually configure a target energy policy based on the power usage score. For example, the user can navigate to a control panel of the energy management interface 105 and selectively self-define a target energy policy based on the power usage score and/or the metrics that are presented via the energy management interface 105.

In the example shown, the energy management interface 105 presents an interactive user interface object 164 (e.g., checkbox) that is selectable by the end user to enable the selection of the target energy policy being suggested by the energy manager 140 (e.g., the target energy policy explained in user interface object 165). The energy manager 140 stores the target energy policy responsive to receiving a selection (e.g., indicated by the check in the checked box) of the user interface object 164. In one implementation, the stored target energy policy is locally maintained and enforced by the energy manager 140 on the client machine 102.

Since each target energy policy includes at least one policy-triggering criterion that is satisfied by the power usage score equaling or exceeding a threshold, the energy manager 140 may search for potentially applicable target energy policies each time the power usage score is re-computed. If, for example, the power usage score is determined to be 76, the energy manager 140 may search for stored (currently implemented) target energy policies that are applicable to a range of scores that include "76." By this logic, a target energy policy with a policy-triggering criterion of "power usage score of 70 or higher" is identified as a potentially applicable policy. The energy manager 140 then proceeds to evaluate the other policy-triggering criteria (if applicable) in each of the identified potentially applicable policies. If the energy manager 140 determines that one or more of the potentially applicable policies have policy-triggering criteria that are satisfied (in full) by the current state of the machine 102 and/or user network 100, the energy manager140 identifies the corresponding policies as "applicable" and automatically implements the target energy action(s) defined within the applicable policies.

In the example depicted in FIG. 1, the energy manager 140 pauses the execution of workload 161 and continues executing workload 162 and the workload 163, per the stored target energy policy. Next time the power usage score reaches or exceeds "75", the energy manager 140 identifies the target energy policy created per the above-described operations and selectively terminates workloads of the workload "type" that is specified by the target energy policy (if any such workloads are executing).

FIG. 2 illustrates an example computing environment 200 for an energy manager that reduces computing inefficiencies in a client computing network 210 supported by a cloud computing system 250 in accordance with a target energy policy. The cloud computing system 250 supports computing resources to process workloads, for example, VM 208-1. In the example illustrated in FIG. 2, the example client computing network 210 includes the VM 208-1.

The VM 208-1 includes an energy manager 240. The energy manager 240 may determine one or more metrics of the VM 208-1 as it processes workflows for the client and determines a power usage score based on the determined one or more metrics. For example, the energy manager 240 determines one or more metrics of the VM 208-1 and determines a power usage score 245 of "90" based on one or more metrics.

The energy manager 240 dynamically assesses policy-triggering criteria defined within each of the target energy policies configured within the client computing network 210. In response to determining that the policy-triggering criteria are satisfied for a select one of the target energy policies, the energy manager 240 performs a target energy action defined within the select target energy policy. In some implementations, the energy manager 240 informs the user via the energy management interface 205 of all changes that were successfully applied (along with any potential errors) following the execution of a target energy action, recalculates the power usage score 245 and tag, and displays the recalculated power usage score and tag to the user.

In the example shown in FIG. 2, a first virtual machine, VM 208-1, stores a target energy policy that provides for offloading workload(s) to other VM(s) in the client compute network 210 when the power usage score of the VM 208-1 reaches or exceeds 85. Depending on the policy and/or preconfigured settings of the energy manager 240, this offloading may be achieved in different ways. In one implementation, the energy manager 240 searches for candidate VMs within the client compute network 210, currently operating with a power usage score below a fixed threshold. If any candidate VMs are identified, the workload manager 240 transfers workloads to one or more of the candidate VMs. In the example shown, however, no candidate VMs are identified (e.g., either there are no other VMs in the client compute network 210 or else where are no VMs that currently have a power usage score below the threshold. In this case, the energy manager 240 initiates action to provision and configure a new VM, VM 208-2, within the client computing network 210. For example, the energy manager 240 instructs a control plane of a cloud computing platform to provision and configure the new VM within the client computing network 210 (e.g., a computing network of multiple VMs).

In the example depicted in FIG. 2, the newly provisioned VM 208-2, shown as a shaded box, is then delegated a portion of the workloads being processed by existing computing resources within the client computing network 210.

The energy manager 240 presents information relevant to the enforcement of the applicable target energy policy on energy management interface 205, which is rendered to a display 202 (e.g., of a user computing device). Here, the energy management interface 205 includes a list of workloads initially executing on VM 208-1 (e.g., workload D, workload E, workload F, and workload G on VM 208-1) within user interface object 211-1. The energy management interface 205 also presents information identifying the new VM 208-2 and identifies a subset of the workloads on VM 208-1 (e.g., workload F and workload G, shown within the user interface object 211-2) that have been migrated to the new VM 208-2 as a result of enforcement of the target energy policy.

In some implementations, the energy manager 240 presents, via the energy management interface 205, various information not shown on the display 202 in FIG. 2, such as power usage scores (e.g., power usage score 245) for one or more computing resources of the client computing network 210, as well as metrics that are significant contributors to each of the power usage scores. For example, the energy management interface 205 presents, in some implementations, the power usage score 245 and all the relevant metrics used to calculate this power usage score, sorted by highest "gradient" to lowest to allow the user to understand the most significant factors (e.g., metrics) that contribute to the power usage score.

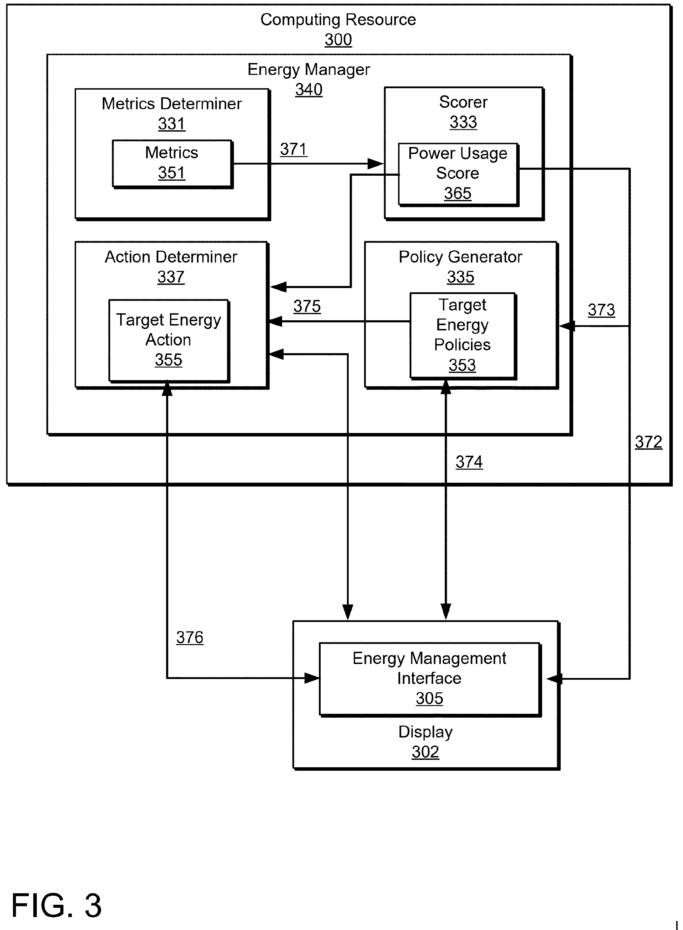

FIG. 3 illustrates an example computing resource 300 including energy manager 340 that reduces computing inefficiencies of a computing resource 300. The client computing resource 300 includes an energy manager 340 that executes on the client computing resource 300, and that provides functionality the same or similar to that described with respect to the energy managers of any of FIGs. 1-3.

In one implementation, a cloud computing system provides hardware to support the computing resource 300. Computing resources (e.g., computing resource 300) can include VMs or physical computing devices. In some implementations, a computing resource 300 (e.g., a VM) may be supported by a single computing device or may be distributed across multiple computing devices of the cloud computing system. In some implementations, the cloud computing system supports multiple other computing resources in addition to the computing resource 300.

The energy manager 340 includes a metrics determiner 331, a scorer 333, a policy generator 335, and an action determiner 337. The metrics determiner 331 determines the metrics of the computing resource 300. Metrics may include, for example, a central processing unit (CPU) utilization, a graphics processing unit (GPU) utilization, memory utilization, disk usage, hardware temperature, hardware fan speed, a task uptime compared to a task's actual usage, a power meter reading (e.g., a wattage), or another metric that describes a processing state of the computing resource 300. In some implementations in which the computing resource 300 is a VM, the metrics 351 may represent the state of one or more hardware processing devices that support the computing resource 300.

The metrics determiner 331 may log one or more of the metrics. The metrics determiner 331 may receive one or more metrics from one or more sensors (e.g., a wattage meter) that measure metrics of the computing resource 300.

The scorer 333 determines a power usage score (e.g., power usage score 365) for the computing resource 300. For example, the metrics may be factors used to determine the power usage score, and the power usage score may be a normalized, weighted average of the factors or other statistics or equations based on the factors. Based on the metrics, the scorer 333 may determine a power usage score (e.g., power usage score 365) for the computing resource 300. For example, the metrics may be factors used to determine the power usage score, and the power usage score may be a normalized, weighted average of the factors or other statistics or equations based on the factors. In some implementations, the factors (e.g., metrics) used to determine the power usage score have different scoring gradients (e.g., weights) because some factors may better indicate actual power usage. For example, in some implementations, a hardware-captured wattage meter reading of the computing resource 300 may be more significant than disk usage. In some implementations, the power usage score (e.g., power usage score 365) represents the power usage of the computing resource 300 and the amount of power being consumed by the computing resource 300. In some implementations, a power usage score of zero (0) means that the computing resource 300 is consuming no power (e.g., it is shut down), and a power usage score of one hundred (100) means that the computing resource 300 is consuming a maximum possible amount of power.

The policy generator 335, in some implementations, suggests one or more user-configurable target energy policies to the user for suggestion via an energy management interface 305 of the display 302. In some implementations, the display corresponds to a client associated with the computing resource 300. For example, the policy generator 335 recommends, based on the calculated power usage score, one or more user-configurable target energy policies to suggest to the user. Each of the user-configurable target energy policies includes one or more target energy actions and one or more policy-triggering criteria. In some implementations, the user approves the suggested configurable target energy policies via the energy management interface 305, for example, by accepting the suggestion via one or more inputs to the energy management interface 305. In some implementations, the policy generator 335 suggests pre-defined target energy policies for each power usage scoring range of a range of power usage scores, with recommended target energy actions to take.

In some implementations, the policy generator 335 accesses a base target energy policy (e.g., a default target energy policy) associated with a predefined power usage score 365 determined by the scorer 333. For example, the base target energy policy has a set of predefined target energy actions and policy-triggering conditions that are the same for all user types. In these implementations, based on the underlying metrics used to generate the power usage score 365, the policy generator 335 modifies the set of predefined target energy actions and/or predefined policy-triggering criteria to generate a modified target energy policy that is adapted to a computing context of the computing resource 300. For example, the underlying metrics used to generate the power usage score 365 describe the computing context. Further, the policy generator 335 may dynamically modify the set of predefined target energy actions and/or predefined policy-triggering criteria as underlying metrics of the power usage score 365 are periodically re-determined. For example, the default target energy policy provides for target energy actions by leaving some low-priority, nonessential workloads executing after a certain hour. In this example, the policy generator 335 suggests the default target energy policy, but after receiving updated underlying metrics, the policy generator 335 suggests a modified target energy policy that provides for a modified target energy action of shutting down such low-priority workloads after those certain hours.

In some implementations, the policy generator 335 applies a machine learning model to the power usage score 365 and/or other computing context data (e.g., underlying metrics of the computing resource 300 that are used to determine the power usage score 365, workload history patterns for the computing resource, etc.) to determine a target energy policy. In some implementations, a supervised learning approach is employed to train the machine learning model to suggest or select a target energy policy based on a training dataset that includes computing context data (e.g., compute network configurations and workload characteristics) for a set of computing resources and target energy actions and/or policies implemented on that set of computing resources, such as to select a policy most similar to policies implemented by other users with similar context data or to select a policy based on patterns of user-implemented target energy actions previously implemented in compute environments with similar context data to that observed with respect to the device on which the policy is being implemented. In other implementations, an unsupervised learning approach is employed to train a model to recognize usage patterns over time and to recognize/suggest a particular target energy action that can be taken to reduce energy consumption.

In some implementations, the user may modify or configure the suggested target energy policies, for example, by modifying one or more of the target energy actions or policy-triggering criteria of the suggested target energy policy. For example, the user may modify a time of day, a workload type, a power usage score threshold, or other policy triggering criteria using the energy management interface 305 and then approve the modified target energy policy using the energy management interface 305.

Target energy policies 353 can involve various target energy actions (e.g., target energy action 355) to be taken responsive to determining whether one or more policy-triggering criteria are met, performed, observed, or otherwise satisfied. Target energy actions can include generating and/or adding a new computing resource (e.g., generating a new VM, adding a physical computing device, etc.) to process workloads currently being processed by the computing resource 300, requesting workloads from another computing resource to process on the computing resource 300, pausing one or more workloads being executed by the computing resource 300, transferring one or more workloads executing on the computing resource 300 to be executed on another computing resource, shutting down the computing resource 300, removing one or more workloads from a queue that were to be executed on the computing resource 300, pausing workloads of a particular category (e.g., non-priority workloads) that are being executed on the computing resource 300, queuing workloads according to particular categories, and other target energy actions. Policy-triggering criteria may include a power usage score (e.g., power usage score 365) greater than or equal to a threshold, a workload type, a time of day, or other policy-triggering criteria. In some implementations, target energy policies are stored as JSON / XML files that reside on the client computing network itself or in shared volume (e.g., for a client computing network that is a cluster network). The energy manager 340 parses the saved target energy policy file and determines the stored policy-triggering criteria and target energy actions associated with the target energy policy.

Policy-triggering criteria may include a power usage score (e.g., power usage score 365) greater than or equal to a threshold or within a specific range, a workload type, a time of day, or other conditions. For example, the user may select and/or configure customizable target energy actions for each power usage tag (i.e., scoring range). The selected target energy actions reduce the server's power consumption based on the severity level that the user chooses and the type of workload in place. For example, the user-configured target energy policy may specify that workloads of a specific type (e.g., payment processing requests) executing on computing resource A be transferred to be executed on computing resource B (e.g., a target energy action) if the power usage score of computing resource A is greater than 80 (e.g., a first condition) and the current time of day is 5:00 p.m. or later (e.g., a second condition). Some policy-triggering criteria may be process-specific, for example, a time limit for executing a workload (e.g., 20 minutes maximum), only executing a workload during particular times of day, only allowing a particular number of processes per computing resource, only allowing a threshold amount of CPU utilization or other policy-triggering criteria.

In some implementations, the policy generator 335 provides the energy management interface 305 on the display 302. The energy management interface 305 allows a user (e.g., a client of the computing resource 300) to configure one or more user-configurable target energy policies, for example, by selecting one or more target energy actions to be taken selecting one or more policy-triggering criteria for taking the one or more target energy actions. For example, the selected target energy actions are selected from a set of possible actions, and the selected policy-triggering criteria are selected from a set of possible policy-triggering criteria. The energy management interface 305 may include a set of drop-down menus or other methods to select target energy actions and policy-triggering criteria for defining a target energy policy. In some implementations, the user may modify one or more policy-triggering criteria or one or more target energy actions suggested by the policy generator 335.

For example, the user may decide to configure a target energy policy that defines a target energy action of shutting down a server with a condition of a power usage score of greater than or equal to 75 and with a second condition of a workload that is in the category of "not important." In another example, the user may decide to configure a target energy policy that defines a target energy action to leave the server as is even with such high-power usage scores, but when a critical workload is being processed at a specific time. Accordingly, users can define different macros for how and when a target energy policy should take place, given one or more specific policy-triggering criteria (e.g., a specific power usage score and tag). For example, users can define only to take a particular target energy action if a particular type of workload is in place, if a specific metric is high (e.g., memory utilization), or if this is happening outside of a pre-defined day/time for testing and production environments.

The action determiner 337 performs or otherwise causes to be performed, a target energy action specified by the target energy policy responsive to the occurrence of policy-triggering criteria specified in the target energy policy. For example, the action determiner 337 detects when policy-triggering criteria associated with a target energy policy are satisfied and, responsive to determining that the policy-triggering criteria are satisfied, performs the target energy action. In some implementations, the action determiner 337 checks the target energy policy, takes appropriate target energy actions based on the defined target energy policies and the policy-triggering criteria (e.g., the server's current power usage score and tag), informs the user via the energy management interface 305 of all the changes that were successfully applied (along with any potential errors), and finally recalculates the power usage score and tag and displays it to the user.

FIG. 3 also depicts example steps performed by the energy manager 340. At step 371, the scorer 333 receives metrics 351 determined by the metrics determiner 311 for the computing resource 300. At step 372, the energy manager 340 displays (e.g., via display 302) the power usage score 365 in the energy management interface 305. At step 373, the policy generator 335 suggests, based on the power usage score 365, target energy policies 353 to apply to the computing resource 300 for the user to configure and/or accept.

In some implementations, at step 374, a user associated with the computing resource 300 configures (e.g., modifies one or more target energy actions and/or policy-triggering criteria of the target energy policy) and/or accepts, using the energy management interface 305, the target energy policies 353 suggested by the policy generator 335. Each of the target energy policies 353 specifies policy-triggering criteria and target energy actions (e.g., target energy action 355) to be performed upon satisfaction of the policy-triggering criteria. The policy generator 335 stores the target energy policies 353 configured by the user.

At step 375, based on the power usage score 365 and in accordance with the target energy policies 353, the action determiner 337 determines a target energy action 355 to perform concerning the computing resource 300. For example, the target energy policies 353 define the target energy action 355 to be performed based on satisfaction one or more policy-triggering criteria specified in the target energy policies 353.

In some implementations, at step 376, the energy manager 340 requests approval to perform the target energy action 355 via the energy management interface 205. For example, the user can approve the application of a target energy policy to request, via the energy management interface 305, to transfer a workload from the computing resource 300 to a second computing resource (if applicable) to maintain baseline power usage and decrease the power usage score of the computing resource 300. The energy manager 340 performs the target energy action 355 concerning the computing resource 300. In some implementations, the energy manager 340 communicates with one or more other computing resources to perform the target energy action (e.g., transferring a workload being processed by the computing resource 300 to the other computing resource for processing by the other computing resource). In certain implementations, where the computing resource 300 is a cluster network, the energy manager 340 may use cluster application programming interfaces (APIs) available to perform the target energy action 355. In some implementations, the energy manager 340 uses a Cluster Shared Volume (CSV) to deploy the target energy action 355, then executes relevant code on each server and reports the results to the user via the energy management interface 305. In some implementations, the energy manager 340 (e.g., the scorer 333) recalculates the power usage scoring and tag for each component of the cluster network. In some implementations, the power usage score is recalculated periodically to consider potential new nodes added to the cluster network after creation.

In one scenario, the computing resource 300 includes four or more processing devices that host VMs. For example, the computing resource 300 may include 100 VMs. During peak hours (e.g., a particular time period of the day), the application load on these VMs results in a higher CPU utilization. In this example, during off-peak hours, the application load on VMs decreases, and 100 VMs are no longer required to perform the workload demand. Accordingly, in this example, in accordance with a target energy policy, the target energy action 355 is taken to reduce the total running VMs to 75. In this example, energy management interface 305 may display a notification that the user (e.g., via the display 302) should the target energy action 355 to reduce the required resources provided from 100 VMs to 75 VMs. In this example, the energy manager 340 may calculate VM placement and migrate the 75 active VMs onto three nodes (e.g., processing devices). The fourth node is either set in a powered-off or standby state. The cluster, VMs, and applications continue to function as expected. If demand increases, the energy manager 340 turns on an idle computer, rebalances the VMs and ensures that the service needs are met. The parameters for this are stored in the target energy policy generated by the policy generator 335.

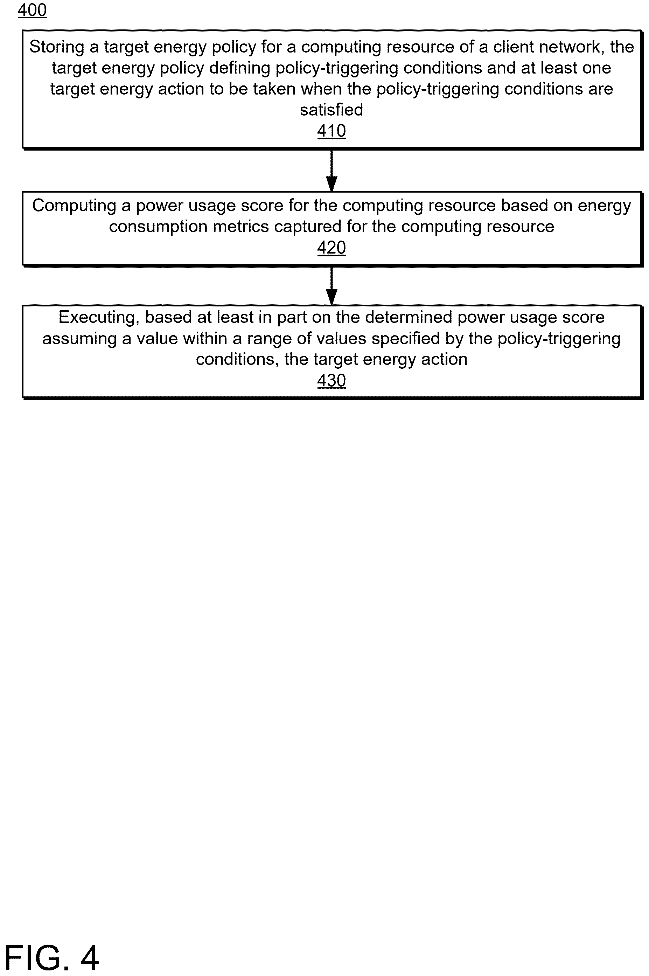

FIG. 4 illustrates examples of operations 400 that reduce energy usage on a processing device.

A storing operation 410 stores a target energy policy for a processing device (e.g., a computing resource), the target energy policy defining policy-triggering criteria, and at least one target energy action to be taken when the policy-triggering criteria are satisfied. The target energy action may include transferring a workload executed on or queued to be executed on the processing device to another processing device.

A computing operation 420 computes a power usage score for the processing device based on energy consumption metrics captured for the processing device. The energy consumption metrics may include one or more of a central processing unit (CPU) utilization, a graphics processing unit (GPU) utilization, a memory utilization, a disk usage, a hardware temperature, a hardware fan speed, or a task uptime compared to a task actual usage of the processing device. Capturing power usage metrics may include receiving, from a power meter, a power meter reading that quantifies the energy usage of the computing resource. In contrast, the energy consumption metrics include the power meter reading. In some implementations, the power usage score and the energy consumption metrics are displayed via an energy management interface of a display.

An executing operation 430 executes, based at least in part on the determined power usage score assuming a value within a range of values specified by the policy-triggering criteria, the target energy action. In some implementations, the target energy policy is determined based on the power usage score, is presented for suggestion via the energy management interface, and the user indicates approval of the target energy policy via the energy management interface. In these implementations, taking the target energy action defined within the target energy policy is further performed responsive to receiving the indication of the approval of the target energy policy via the energy management interface.

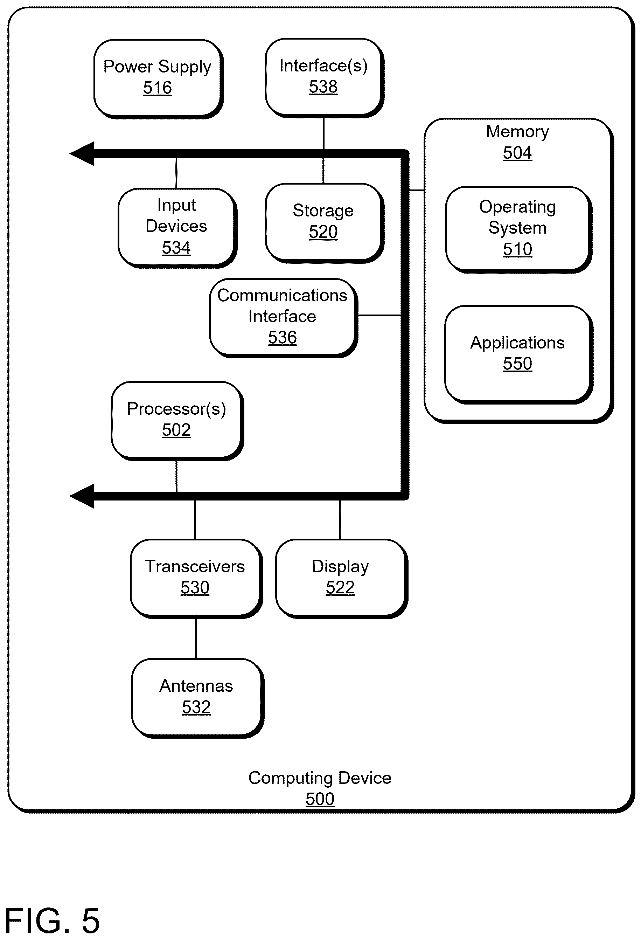

FIG. 5 illustrates an example computing device 500 for implementing the described technology. The computing device 500 may be a client computing device (such as a laptop computer, a desktop computer, or a tablet computer), a server/cloud computing device, an Internet-of-Things (IoT), any other type of computing device, or a combination of these options. The computing device 500 includes one or more hardware processor(s) 502 and a memory 504. The memory 504 generally includes both volatile memory (e.g., RAM) and nonvolatile memory (e.g., flash memory), although one or the other type of memory may be omitted. An operating system 510 resides in the memory 504 and is executed by the processor(s) 502. In some implementations, the computing device 500 includes and/or is communicatively coupled to storage 520.

In the example computing device 500, as shown in FIG. 5, one or more software modules, segments, and/or processors, such as an energy manager, a metrics determiner, an action determiner, a policy generator, a scorer, a management application, a VM or other virtual computing resource, applications 550, and other program code and modules are loaded into the operating system 510 on the memory 504 and/or the storage 520 and executed by the processor(s) 502. The storage 520 may store data (e.g., including one or more target energy policies) and be local to the computing device 500 or may be remote and communicatively connected to the computing device 500. In particular, in one implementation, components of a system for reducing energy usage of a client network may be implemented entirely in hardware or in a combination of hardware circuitry and software.

The computing device 500 includes a power supply 516, which may include or be connected to one or more batteries or other power sources and which provides power to other components of the computing device 500. The power supply 516 may also be connected to an external power source that overrides or recharges the built-in batteries or other power sources.

The computing device 500 may include one or more communication transceivers 530, which may be connected to one or more antenna(s) 532 to provide network connectivity (e.g., mobile phone network, Wi-Fi^{®}, Bluetooth^{®}) to one or more other servers, client devices, IoT devices, and other computing and communications devices. The computing device 500 may further include a communications interface 536 (such as a network adapter or an I/O port, which are types of communication devices). The computing device 500 may use the adapter and any other types of communication devices for establishing connections over a wide-area network (WAN) or local-area network (LAN). It should be appreciated that the network connections shown are exemplary and that other communications devices and means for establishing a communications link between the computing device 500 and other devices may be used.

The computing device 500 may include one or more input devices 534 such that a user may enter commands and information (e.g., a keyboard, trackpad, or mouse). These and other input devices may be coupled to the server by one or more interfaces 538, such as a serial port interface, parallel port, or universal serial bus (USB). The computing device 500 may further include a display 522, such as a touchscreen display.

The computing device 500 may include a variety of tangible processor-readable storage media and intangible processor-readable communication signals. Tangible processor-readable storage can be embodied by any available media that can be accessed by the computing device 500 and can include both volatile and nonvolatile storage media and removable and non-removable storage media. Tangible processor-readable storage media excludes intangible, transitory communications signals (such as signals per se) and includes volatile and nonvolatile, removable, and non-removable storage media implemented in any method, process, or technology for storage of information such as processor-readable instructions, data structures, program modules, or other data. Tangible processor-readable storage media includes but is not limited to, RAM, ROM, EEPROM, flash memory or other memory technology, CDROM, digital versatile disks (DVD) or other optical disk storage, magnetic cassettes, magnetic tape, magnetic disk storage, or other magnetic storage devices, or any other tangible medium which can be used to store the desired information and which can be accessed by the computing device 500. In contrast to tangible processor-readable storage media, intangible processor-readable communication signals may embody processor-readable instructions, data structures, program modules, or other data resident in a modulated data signal, such as a carrier wave or other signal transport mechanism. The term "modulated data signal" means a signal that has one or more of its characteristics set or changed in such a manner as to encode information in the signal. By way of example, and not limitation, intangible communication signals include signals traveling through wired media such as a wired network or direct-wired connection, and wireless media such as acoustic, RF, infrared, and other wireless media.

Clause 1. A method for reducing power usage of a processing device, the method comprising: storing a target energy policy for a processing device, the target energy policy defining policy-triggering criteria and a target energy action to be taken when the policy-triggering criteria are satisfied; computing a power usage score for the processing device based on energy consumption metrics captured for the processing device; and executing the target energy action based at least in part on the computed power usage score assuming a value within a range of values specified by the policy-triggering criteria.

Clause 2. The method of clause 1, wherein the energy consumption metrics include one or more of a central processing unit (CPU) utilization, a graphics processing unit (GPU) utilization, a memory utilization, a disk usage, a hardware temperature, a hardware fan speed, or a task uptime compared to a task actual usage of the processing device.

Clause 3. The method of clause 1, further comprising: receiving, from a power meter, a power meter reading quantifying an energy usage of the processing device, wherein the energy consumption metrics include the power meter reading.

Clause 4. The method of clause 1, wherein the target energy action includes pausing a workload executing on the processing device.

Clause 5. The method of clause 1, wherein the target energy action includes transferring a workload executed on or queued to be executed on the processing device to another processing device configured within a same user network.

Clause 6. The method of clause 1, wherein the target energy policy is defined at least in part based on input received from a user.

Clause 7. The method of clause 1, further comprising: determining the target energy policy based on the power usage score; presenting the target energy policy for suggestion via a user interface ; and receiving an indication of approval of the target energy policy via the user interface, wherein taking the target energy action defined within the target energy policy is further performed responsive to receiving the indication of the approval of the target energy policy via the user interface.

Clause 8. One or more tangible processor-readable storage media embodied with instructions for executing on one or more processors and circuits of a computing device a process for reducing power usage of a client network of computing resources, the process comprising: accessing a target energy policy for the client network, the target energy policy defining policy-triggering criteria and at least one target energy action to be taken when the policy-triggering criteria are satisfied; computing a power usage score for a computing resource of the client network based on energy consumption metrics captured for the computing resource; and executing the target energy action based at least in part on the computed power usage score assuming a value within a range of values specified by the policy-triggering criteria.

Clause 9. The one or more tangible processor-readable storage media of clause 8, wherein the energy consumption metrics include one or more of a central processing unit (CPU) utilization, a graphics processing unit (GPU) utilization, a memory utilization, a disk usage, a hardware temperature, a hardware fan speed, or a task uptime compared to a task actual usage of the computing resource.

Clause 10. The one or more tangible processor-readable storage media of clause 8, wherein the process further comprises: receiving, from a power meter, a power meter reading quantifying an energy usage of the computing resource, wherein the energy consumption metrics include the power meter reading.

Clause 11. The one or more tangible processor-readable storage media of clause 8, wherein the target energy action includes adding an additional computing resource to the client network.

Clause 12. The one or more tangible processor-readable storage media of clause 8, wherein the target energy action includes transferring a workload executed on or queued to be executed on the computing resource to another computing resource within the client network.

Clause 13. The one or more tangible processor-readable storage media of clause 8, wherein the target energy policy is defined at least in part based on input received from a user.

Clause 14. The one or more tangible processor-readable storage media of clause 8, wherein the process further comprises: determining the target energy policy based on the power usage score; presenting the target energy policy for suggestion via a user interface; and receiving an indication of approval of the target energy policy via the user interface, wherein taking the target energy action defined within the target energy policy is further performed responsive to receiving the indication of the approval of the target energy policy via the user interface.

Clause 15. A computing system for reducing power usage of a client network of computing resources, the computing system comprising: one or more hardware processors; a policy generator executable by the one or more hardware processors and configured to access a target energy policy for the client network, the target energy policy defining policy-triggering criteria and at least one target energy action to be taken when the policy-triggering criteria are satisfied; a scorer stored in memory and executable by the one or more hardware processors, the scorer configured to compute a power usage score for a computing resource of the client network based on energy consumption metrics captured for the computing resource; and an action determiner executable by the one or more hardware processors and configured to execute the target energy action based at least in part on the determined power usage score assuming a value within a range of values specified by the policy-triggering criteria.

Clause 16. The computing system of clause 15, wherein the energy consumption metrics include one or more of a central processing unit (CPU) utilization, a graphics processing unit (GPU) utilization, a memory utilization, a disk usage, a hardware temperature, a hardware fan speed, or a task uptime compared to a task actual usage of the computing resource.

Clause 17. The computing system of clause 15, further comprising a metrics determiner executable by the one or more hardware processors and configured to receive, from a power meter, a power meter reading quantifying an energy usage of the computing resource, wherein the energy consumption metrics include the power meter reading.

Clause 18. The computing system of clause 15, wherein the target energy action includes adding an additional computing resource to the client network.

Clause 19. The computing system of clause 15, wherein the policy generator is further configured to define the target energy policy at least in part based on input received from a user.

Clause 20. The computing system of clause 15, wherein the policy generator is further configured to: determine the target energy policy based on the power usage score; present the target energy policy for suggestion via a user interface; and receive an indication of approval of the target energy policy via the user interface, wherein taking the target energy action defined within the target energy policy is further performed responsive to receiving the indication of the approval of the target energy policy via the user interface.

Clause 21. A system for reducing power usage of a processing device, the system comprising: means for storing a target energy policy for a processing device, the target energy policy defining policy-triggering criteria and a target energy action to be taken when the policy-triggering criteria are satisfied; means for computing a power usage score for the processing device based on energy consumption metrics captured for the processing device; and means for executing the target energy action based at least in part on the computed power usage score assuming a value within a range of values specified by the policy-triggering criteria.

Clause 22. The system of clause 21, wherein the energy consumption metrics include one or more of a central processing unit (CPU) utilization, a graphics processing unit (GPU) utilization, a memory utilization, a disk usage, a hardware temperature, a hardware fan speed, or a task uptime compared to a task actual usage of the processing device.

Clause 23. The system of clause 21, further comprising: means for receiving, from a power meter, a power meter reading quantifying an energy usage of the processing device, wherein the energy consumption metrics include the power meter reading.

Clause 24. The system of clause 21, wherein the target energy action includes pausing a workload executing on the processing device.

Clause 25. The system of clause 21, wherein the target energy action includes transferring a workload executed on or queued to be executed on the processing device to another processing device configured within a same user network.

Clause 26. The system of clause 21, wherein the target energy policy is defined at least in part based on input received from a user.

Clause 27. The system of clause 21, further comprising: means for determining the target energy policy based on the power usage score; presenting the target energy policy for suggestion via a user interface; and means for receiving an indication of approval of the target energy policy via the user interface, wherein taking the target energy action defined within the target energy policy is further performed responsive to receiving the indication of the approval of the target energy policy via the user interface.

Some implementations may comprise an article of manufacture, which excludes software per se. An article of manufacture may comprise a tangible storage medium to store logic and/or data. Examples of a storage medium may include one or more types of computer-readable storage media capable of storing electronic data, including volatile memory or nonvolatile memory, removable or non-removable memory, erasable or non-erasable memory, writeable or re-writeable memory, and so forth. Examples of the logic may include various software elements, such as software components, programs, applications, computer programs, application programs, system programs, machine programs, operating system software, middleware, firmware, software modules, routines, subroutines, operation segments, methods, procedures, software interfaces, application program interfaces (API), instruction sets, computing code, computer code, code segments, computer code segments, words, values, symbols, or any combination thereof. In one implementation, for example, an article of manufacture may store executable computer program instructions that, when executed by a computer, cause the computer to perform methods and/or operations in accordance with the described embodiments. The executable computer program instructions may include any suitable types of code, such as source code, compiled code, interpreted code, executable code, static code, dynamic code, and the like. The executable computer program instructions may be implemented according to a predefined computer language, manner, or syntax, for instructing a computer to perform a certain operation segment. The instructions may be implemented using any suitable high-level, low-level, object-oriented, visual, compiled, and/or interpreted programming language.

The implementations described herein are implemented as logical steps in one or more computer systems. The logical operations may be implemented (1) as a sequence of processor-implemented steps executing in one or more computer systems and (2) as interconnected machine or circuit modules within one or more computer systems. The implementation is a matter of choice, dependent on the performance requirements of the computer system being utilized. Accordingly, the logical operations making up the implementations described herein are referred to variously as operations, steps, objects, or modules. Furthermore, it should be understood that logical operations may be performed in any order, unless explicitly claimed otherwise or a specific order is inherently necessitated by the claim language.

## Claims

1. A method for reducing power usage of a processing device, the method comprising:
storing a target energy policy for a processing device, the target energy policy defining policy-triggering criteria and a target energy action to be taken when the policy-triggering criteria are satisfied;
computing a power usage score for the processing device based on energy consumption metrics of the processing device; and
executing the target energy action based at least in part on the computed power usage score assuming a value within a range of values specified by the policy-triggering criteria.

2. The method of claim 1, wherein the energy consumption metrics include one or more of a central processing unit, CPU, utilization, a graphics processing unit, GPU, utilization, a memory utilization, a disk usage, a hardware temperature, a hardware fan speed, or a task uptime compared to a task actual usage of the processing device.

3. The method of claim 1, further comprising one of the following:
(i) receiving, from a power meter, a power meter reading quantifying an energy usage of the processing device, wherein the energy consumption metrics include the power meter reading;
(ii) determining the target energy policy based on the power usage score;
presenting the target energy policy for suggestion via a user interface; and
receiving an indication of approval of the target energy policy via the user interface, wherein taking the target energy action defined within the target energy policy is further performed responsive to receiving the indication of the approval of the target energy policy via the user interface.

4. The method of claim 1, wherein the target energy action includes one of the following:
(i) pausing a workload executing on the processing device;
(ii) transferring a workload executed on or queued to be executed on the processing device to another processing device configured within a same user network.

5. The method of claim 1, wherein the target energy policy is defined at least in part based on input received from a user.

6. One or more tangible processor-readable storage media embodied with instructions for executing on one or more processors and circuits of a computing device a process for reducing power usage within a client network of computing resources, the process comprising:
accessing a target energy policy for the client network, the target energy policy defining policy-triggering criteria and at least one target energy action to be taken when the policy-triggering criteria are satisfied;
computing a power usage score for a computing resource of the client network based on energy consumption metrics of the computing resource; and
executing the target energy action based at least in part on the computed power usage score assuming a value within a range of values specified by the policy-triggering criteria.

7. The one or more tangible processor-readable storage media of claim 6, wherein the energy consumption metrics include one or more of a central processing unit, CPU, utilization, a graphics processing unit, GPU, utilization, a memory utilization, a disk usage, a hardware temperature, a hardware fan speed, or a task uptime compared to a task actual usage of the computing resource.

8. The one or more tangible processor-readable storage media of claim 6,
wherein the process further comprises one of the following:
(i) receiving, from a power meter, a power meter reading quantifying an energy usage of the computing resource, wherein the energy consumption metrics include the power meter reading;
(ii) determining the target energy policy based on the power usage score;
presenting the target energy policy for suggestion via a user interface; and
receiving an indication of approval of the target energy policy via the user interface, wherein taking the target energy action defined within the target energy policy is further performed responsive to receiving the indication of the approval of the target energy policy via the user interface.

9. The one or more tangible processor-readable storage media of claim 6,
wherein the target energy action includes one of the following:
(i) adding an additional computing resource to the client network;
(ii) transferring a workload executed on or queued to be executed on the computing resource to another computing resource within the client network.

10. The one or more tangible processor-readable storage media of claim 6,
wherein the target energy policy is defined at least in part based on input received from a user.

11. A computing system for reducing power usage of within client network of computing resources, the computing system comprising:
one or more hardware processors;
a policy generator executable by the one or more hardware processors and configured to access a target energy policy for the client network, the target energy policy defining policy-triggering criteria and at least one target energy action to be taken when the policy-triggering criteria are satisfied;
a scorer stored in memory and executable by the one or more hardware processors, the scorer configured to compute a power usage score for a computing resource of the client network based on energy consumption metrics of the computing resource; and
an action determiner executable by the one or more hardware processors and configured to execute the target energy action based at least in part on the determined power usage score assuming a value within a range of values specified by the policy-triggering criteria.

12. The computing system of claim 11, wherein the energy consumption metrics include one or more of a central processing unit, CPU, utilization, a graphics processing unit, GPU, utilization, a memory utilization, a disk usage, a hardware temperature, a hardware fan speed, or a task uptime compared to a task actual usage of the computing resource.

13. The computing system of claim 11, further comprising a metrics determiner executable by the one or more hardware processors and configured to receive, from a power meter, a power meter reading quantifying an energy usage of the computing resource, wherein the energy consumption metrics include the power meter reading.

14. The computing system of claim 11, wherein the target energy action includes adding an additional computing resource to the client network.

15. The computing system of claim 11, wherein the policy generator is further configured to provide one of the following:
(i) define the target energy policy at least in part based on input received from a user;
(ii) determine the target energy policy based on the power usage score;
present the target energy policy for suggestion via a user interface; and
receive an indication of approval of the target energy policy via the user interface, wherein taking the target energy action defined within the target energy policy is further performed responsive to receiving the indication of the approval of the target energy policy via the user interface.
